# EUROPÄISCHE PATENTSCHRIFT

(11) **EP 0 642 475 B1**
(45) Veröffentlichungstag und Bekanntmachung des Hinweises auf die Patenterteilung: **19.06.1996**
(21) Anmeldenummer: 93905292.4
(22) Anmeldetag: 03.03.1993
(51) Int. Cl.: C03C 17/02, C03C 25/02

(54) **VERFAHREN ZUR HERSTELLUNG VON GLASSUBSTRATEN MIT VERBESSERTER LANGZEITSTANDFÄHIGKEIT BEI ERHÖHTEN TEMPERATUREN**
METHOD OF PRODUCING GLASS SUBSTRATES WITH IMPROVED LONG-TERM RIGIDITY AT ELEVATED TEMPERATURES
PROCEDE DE FABRICATION DE SUBSTRATS DE VERRE PRESENTANT UNE MEILLEURE STABILITE A LONG TERME A DES TEMPERATURES TRES ELEVEES

(30) Priorität: 26.05.1992 DE 4217432
(43) Veröffentlichungstag der Anmeldung: 15.03.1995
(73) Patentinhaber: INSTITUT FÜR NEUE MATERIALIEN gemeinnützige GmbH, D-66123 Saarbrücken (DE)
(72) Erfinder: MENNIG, Martin, D-6607 Fischbach (DE); JONSCHKER, Gerhard, D-6683 Elversberg (DE); SCHMIDT, Helmut, D-6604 Saarbrücken-Güdingen (DE)
(74) Vertreter: Barz, Peter, Dr.
(86) Internationale Anmeldenummer: EP9300484
(87) Internationale Veröffentlichungsnummer: WO9324424

(56) Entgegenhaltungen:
- AT-B- 226 902
- AT-B- 232 212
- DE-A- 3 719 339
- US-A- 2 474 061
- PATENT ABSTRACTS OF JAPAN, unexamined applications, C Field, Band 13, Nr. 487, 06. November 1989, THE PATENT OFFICE JAPANESE GOVERNMENT, Seite 165 C 649
- PATENT ABSTRACTS OF JAPAN, unexamined applications, C Field, Band 9, Nr. 192, 08. August 1985, THE PATENT OFFICE JAPANESE GOVERNMENT, Seite 71 C 296

## Beschreibung

Die vorliegende Erfindung betrifft ein Verfahren zur Herstellung von Glassubstraten mit verbesserter Langzeitstandfähigkeit bei erhöhten Temperaturen, insbesondere ein Verfahren, bei dem ein Glassubstrat mit einem Überzug versehen wird, der eine gewisse Restporosität aufweist und deshalb bei Einwirkung hoher Temperaturen eine Volumenkontraktion erfährt.

Es ist bekannt, daß man Glas mit einem Überzug aus Materialien auf der Basis Von Si, Ti, Zr, Al usw. versehen kann, um verschiedene Eigenschaften des Grundglases zu verbessern. Grundsätzlich wird dabei über einen naßchemischen Prozeß (z.B. Sol-Gel-Prozeß) eine Überzugsschicht auf dem Grundglas aufgetragen und diese Schicht dann durch Erwärmung zu einem porenfreien Film verdichtet. Es ist auch bekannt, daß solche Überzüge z.B. die Festigkeit von Glas erhöhen, besonders dann, wenn ihr Ausdehnungskoeffizient kleiner als der des Grundglases ist. Dabei lassen sich zwei Mechanismen unterscheiden. Der eine besteht in der Verringerung der Anzahl von Defekten auf der Glasoberfläche und der andere besteht darin, daß sich durch den kleineren thermischen Ausdehnungskoeffizienten der Schicht beim Abkühlen nach der Verdichtung Druckspannungen im oberflächennahen Bereich ausbilden. Da solche Druckspannungen generell die Festigkeit von Glas erhöhen, wirkt sich dies auch auf die thermische Beständigkeit aus, da dadurch auch die bei erhöhten Temperaturen auftretenden Spannungen erst bei größeren Belastungen zum Bruch führen. Ähnliches kennt man von thermisch oder chemisch gehärteten Gläsern; auch diese zeichnen sich durch eine höhere Thermoschockbeständigkeit aus. Deshalb werden derartige Gläser in Gebieten eingesetzt, wo sie einer thermischen Belastung standhalten können müssen, z.B. beim Brandschutz.

Während es also bereits Verfahren gibt, das Thermoschockverhalten von Gläsern zu verbessern, ist es bisher noch nicht gelungen, Gläser bereitzustellen, deren Langzeitstandfähigkeit bei erhöhten Temperaturen zufriedenstellend ist, also z.B. eine Glasscheibe zu entwickeln, die nicht wegzufließen beginnt, wenn sie über einen längeren Zeitraum einer erhöhten Temperatur ausgesetzt wird. Insbesondere Gläser, die leicht und kostengünstig hergestellt werden können.(und deshalb für die meisten Anwendungen bevorzugt werden), z.B. Natron-Kalk-Gläser, weisen in der Regel, bedingt durch ihre chemische Zusammensetzung, eine niedrige Glasübergangstemperatur bzw. eine niedrige Viskosität bei Temperaturen auf, denen dieses Glas im Rahmen einer bestimmten Anwendung ausgesetzt wird. Selbst bei vergleichsweise milden Temperaturen kann es bei derartigen Gläsern bereits zu Problemen hinsichtlich des Erweichens und Wegfließens kommen. Beispiele für Gläser, die hohen Temperaturen (gegebenenfalls in Kombination mit korrosiven Bedingungen) ausgesetzt sein können, sind Ofensichtfenster, Brandschutzverglasungen, optische Gläser und Chemikalienbehältnisse.

Der vorliegenden Erfindung liegt somit die Aufgabe zugrunde, ein Verfahren bereitzustellen, mit dem man ausgehend von einem möglichst billigen Grundglas in kostengünstiger Weise zu Glassubstraten mit verbessertem Fließverhalten, d.h. verbesserter Langzeitstandfähigkeit bei erhöhten Temperaturen, gelangen kann.

Diese Aufgabe wird erfindungsgemäß dadurch gelöst, daß man mit Hilfe eines Überzugs auf der Oberfläche des Glassubstrats nicht wie bei den üblichen Verfahren zur Verbesserung der Thermoschockbeständigkeit eine Druckspannung, sondern eine Zugspannung erzeugt, und zwar während der Aufheiz- bzw. Erhitzungsperiode bei der Hochtemperaturbelastung. Dies gelingt dann, wenn auf das Glassubstrat Schichten aufgebracht werden, die durch ihre thermomechanischen bzw. thermochemischen Eigenschaften bei Einwirkung hoher Temperaturen zu einer Volumenreduktion neigen und damit auf der Oberfläche des Glassubstrates Zugspannungen erzeugen. Derartige Schichten lassen sich herstellen, wenn man in üblicher Weise einen Überzug auf dem Glassubstrat herstellt, diesen aber nicht vollständig verdichtet. Mit anderen Worten, der Überzug weist nach seiner Herstellung noch eine gewisse Restporosität auf.

Demgemäß stellt die Erfindung ein Verfahren zur Herstellung von Glassubstraten mit verbesserter Langzeitstandfähigkeit bei erhöhten Temperaturen bereit, bei dem man
(a) auf das Glassubstrat eine Überzugszusammensetzung aufbringt, die erhalten wurde durch Hydrolyse und Kondensation mindestens einer flüssigen und/oder in einem Lösungsmittel gelösten Verbindung mindestens eines Elements aus der Gruppe Si, Al, Ti und Zr und/oder eines entsprechenden Vorkondensats, gegebenenfalls in Kombination mit im Reaktionsmedium löslichen Verbindungen mindestens eines Elements aus der Gruppe der Alkalimetalle (z.B. Na, K, Li), Erdalkalimetalle (z.B. Ca, Mg, Ba) und Bor und gegebenenfalls in Anwesenheit eines Kondensationskatalysators; und
(b) den so erhaltenen Überzug wärmebehandelt.

Dieses Verfahren ist dadurch gekennzeichnet, daß der Überzug nicht vollständig verdichtet wird, d.h. am Ende der Wärmebehandlung noch eine gewisse Restporosität von 1 bis 10 Volumenprozent aufweist, welche Mikroporen mit einer Porengröße im unteren nm-Bereich (≤ 20 nm) umfaßt.

Vorzugsweise wird die Überzugszusammensetzung nach dem Sol/Gel-Verfahren hergestellt.

Geeignet für den obigen Zweck sind mikroporöse Schichten. Derartige Schichten sind z.B. solche mit einem relativ hohen SiO₂-Anteil (z.B. mindestens 80 und insbesondere mindestens 90 Mol-% Si, bezogen auf insgesamt anwesende Zentralatome). Derartige Schichten verfügen über eine hohe Grenzflächenenergie und können beim Erwärmen kompaktiert werden. Eine Mikroporosität kann aber auch dadurch erzeugt werden, daß man z.B. eine Alkyltrialkoxysilan-Verbindung als eine Ausgangsverbindung für die Überzugszusammensetzung einsetzt. Die nicht hydrolysierbare Alkylgruppe ist dann im fertigen Überzug noch vorhanden, kann aber z.B. thermisch entfernt werden, wobei sie eine "Lücke" (Pore) zurückläßt. Zusätzlich macht die Verwendung einer derartigen Verbindung (z.B. Methyltriethoxysilan) den Überzug weniger spröde (Erhöhung der Plastizität) und wird auch aus diesem Grund bevorzugt. Vorzugsweise werden mehr als 50, insbesondere mehr als 75 Mol-% an derartiger Ausgangsverbindung eingesetzt. Auch der unten näher beschriebene Zusatz von z.B. Kieselsol kann die Porosität des Überzugs erhöhen, wenngleich es sich in diesem Fall nicht um (die bevorzugte) Mikroporosität handelt.

Als Grundglas für die Glassubstrate, die nach dem obigen Verfahren beschichtet werden soll, kommen insbesondere Silicatgläser (z.B. Fensterglas und Flaschenglas), Bleisilicatgläser, Phosphat-, Borat- und Seltenerd-Gläser (La, Ce, Y und dergleichen) mit oder ohne Alkali- und/oder Erdalkalianteile (z.B. Na, K, Ca, Ba) in Frage. Es können jedoch auch andere Gläser nach dem erfindungsgemäßen Verfahren beschichtet werden, z.B. Halogenid- (z.B. Fluorid-) und Chalkogenid- (z.B. Sulfat-) Gläser.

Das Glassubstrat kann in beliebiger physikalischer Form vorliegen, z. B. in Platten-, Strang-, Rohr- oder Faserform oder in Form eines Hohlkörpers. In einer speziellen Ausführungsform werden Glas- oder Keramikfasergewebe mit der erfindungsgemäßen Überzugszusammensetzung imprägniert, wobei Materialien erhalten werden, die besonders für Brandschutzzwecke geeignet sind.

Erfindungsgemäß werden als Überzugs zusammensetzungen SiO₂-, Al₂O₃-, ZrO₂-, TiO₂-, SiO₂/TiO₂-, SiO₂/ZrO₂-, B₂O₃/SiO₂-, Na₂O/B₂O₃/SiO₂- und Na₂O/Al₂O₃/B₂O₃/SiO₂-Zusammensetzungen bevorzugt. Besonders bevorzugt werden SiO₂-, SiO₂/ZrO₂- und SiO₂/TiO₂-Überzugszusammensetzungen.

Als Ausgangsverbindungen für die Überzugszusammensetzung eignen sich flüssige und/oder im Reaktionsmedium (Lösungsmittel) lösliche Verbindungen der genannten Elemente, z.B. Hydroxide, Alkoxide, Halogenide (Fluoride, Chloride, Bromide, Iodide), Säuren, Salze mit organischen oder anorganischen Säuren oder Basen und Komplexverbindungen bzw. Additionsverbindungen.

Konkrete Beispiele für die obigen Verbindungen sind Hydroxide, wie NaOH, KOH, Mg(OH)₂, Ca(OH)₂ und Al(OH)₃; hydrolysierbare Alkoxide, wie NaOR, KOR, Mg(OR)₂, Ca(OR)₂, Al(OR)₃, B(OR)₃, Si(OR)₄, RSi(OR)₃, R₂Si(OR)₂, Ti(OR)₄ und Zr(OR)₄, wobei R eine geradkettige oder verzweigte, substituierte oder unsubstituierte Alkylgruppe mit 1 bis 6 (vorzugsweise 1 bis 4) Kohlenstoffatomen (z.B. Methyl, Ethyl, Propyl oder Butyl) ist; Halogenide, wie NaCl, KBr, CaCl₂, SiCl₄, R'SiCl₃, R'₂SiCl₂, TiCl₄ und Zrcl₄ (R' = von den obigen Alkylgruppen abgeleitete Alkoxygruppe); Säuren, wie Borsäure; Salze, wie Borate, Nitrate, Phosphate, Carboxylate (z.B. Formiate, Acetate, Citrate, Tartrate, basische Acetate und Benzoate) und Phenolate; sowie Komplexverbindungen, wie Acetylacetonate und Salicylate und Anlagerungs-(Additions-)verbindungen wie z.B. Zr (NO₃)₄· Dioxan, THF, Pyridin und dergleichen.

Vorzugsweise ist eine der Ausgangsverbindungen eine Verbindung der allgemeinen Formel (I):

Si(OR)₄ (I)

worin R wie oben definiert ist.

Bei einer anderen bevorzugten Ausführungsform der vorliegenden Erfindung umfassen die Ausgangsverbindungen neben solchen der obigen Formel (I) auch solche der allgemeinen Formel (II):

R*Si (OR)₃ (II)

worin R wie oben definiert ist und R* für R oder Aryl, insbesondere Phenyl, steht.

Die Ausgangsverbindungen werden vorzugsweise in Wasser oder einem organischen Lösungsmittel oder einer Mischung aus Wasser und einem damit mischbaren organischen Lösungsmittel (vorzugsweise einem Alkohol) gelöst und der hydrolytischen Polykondensation unterworfen. Organische Lösungsmittel sind im Hinblick auf die erzielbaren besseren Beschichtungseigenschaften bevorzugt, wobei mit Wasser zumindest teilweise mischbare Lösungsmittel besonders bevorzugt werden. Beispiele für geeignete organische Lösungsmittel sind ein- oder mehrwertige Alkohole, wie Methanol, Ethanol, n-Propanol, Isopropanol, n-Butanol, tert-Butanol, Ethylenglykol und Glycerin; Ether, wie Dimethoxyethan, Tetrahydrofuran und Ethylenglykolmonomethylether; Ester, wie Essigester und Diethylenglykolacetat; Ketone, wie Aceton und Methylethylketon; Kohlenwasserstoffe, wie Benzol und Toluol; Halogenkohlenwasserstoffe, wie Kohlenstofftetrachlorid; und Dimethylformamid. Unter den organischen Lösungsmitteln werden Alkohole bevorzugt.

Die Hydrolyse und Polykondensation kann in einem Schritt in Gegenwart mindestens der zur vollständigen Hydrolyse der vorhandenen hydrolysierbaren Gruppen stöchiometrisch erforderlichen Wassermenge durchgeführt werden. Alternativ kann man zunächst eine Vorkondensation in Gegenwart einer geringeren Wassermenge als der zur vollständigen Hydrolyse oder der vorhandenen hydrolysierbaren Gruppen stöchiometrisch erforderlichen Menge und anschließend eine Weiterkondensation unter Zugabe mindestens der Wassermenge, die zur Hydrolyse der verbliebenen hydrolysierbaren Gruppen erforderlich ist, durchführen.

Die Polykondensation kann gegebenenfalls in Gegenwart eines Kondensationskatalysators durchgeführt werden, z.B. einer Protonen oder Hydroxylionen abspaltenden Verbindung oder eines Amins. Spezielle Beispiele hierfür sind organische und anorganische Säuren, wie Salzsäure, Schwefelsäure, Phosphorsäure, Ameisensäure und Essigsäure, sowie organische und anorganische Basen, wie Ammoniak, Alkali- und Erdalkalimetallhydroxide (z.B. NaOH, KOH oder Ca(OH)₂) und im Reaktionsmedium lösliche Amide, z.B. niedere Alkylamine und Alkanolamine. Hierbei sind flüchtige Säuren und Basen, insbesondere Salzsäure, Ammoniak und Triethylamin, besonders bevorzugt. Die Gesamt-Katalysatorkonzentration kann z.B. bis zu 5 Mol/Liter betragen.

Die Konzentration der Ausgangsverbindung(en), bezogen auf das Lösungsmittel, wird so eingestellt, daß eine für die anschließende Beschichtung geeignete Viskosität der Überzugszusammensetzung gewährleistet ist.

Die Hydrolyse und partielle Vorkondensation wird üblicherweise bei Raumtemperatur durchgeführt, jedoch können auch höhere Temperaturen, vorzugsweise bis zum Siedepunkt des verwendeten Lösungsmittels, angewandt werden. Die Reaktionsbedingungen werden so eingestellt, daß die entstehende Beschichtungslösung eine für die Beschichtung des Grundglases in dünner Schicht geeignete Viskosität von z. B. 1 bis 5 mPas hat.

Die erhaltene Beschichtungslösung (Überzugszusammensetzung) wird dann auf übliche Weise auf das zu behandelnde Glassubstrat aufgebracht, vorzugsweise durch Tauchen, Ziehen oder Sprühen. Besonders bevorzugt werden Tauchverfahren.

Die Auftragsmenge wird so gewählt, daß die Schichtdicke des nach der Wärmebehandlung erhaltene Überzugs etwa 0,8 bis 8 µm, vorzugsweise 1,5 bis 3 µm, z.B. 2 µm, beträgt.

Insbesondere wenn Schichtdicken über 2 µm angestrebt werden, wird vorzugsweise eine Dispersion von z.B. SiO₂, TiO₂, Al₂O₃ und/oder ZrO₂ bzw. der entsprechenden Mischoxide in Wasser und/oder einem anderen geeigneten Lösungsmittel der Beschichtungslösung zugesetzt, oder in den Herstellungsprozeß mit einbezogen. Die Teilchengröße der eingesetzten Dispersionen ist von der beabsichtigten Verwendung abhängig, beträgt aber vorzugsweise 4 bis 20 nm.

Der Beschichtungslösung können auch rheologisch aktive Additive in üblichen Mengen zugesetzt werden. Beispiele für derartige Additive sind Cellulosederivate, wie Methylcellulose und Hydroxypropylcellulose, Ethylenglykol, Glycerin, Polyethylenglykol, Polyvinylacetat, Polyvinylalkohol und dergleichen.

Bei der Glasherstellung kann die Überzugszusammensetzung direkt auf das noch heiße Grundglas aus dem Fertigungsprozeß aufgebracht werden, z. B. durch Aerosol-Beschichtung. In diesem Fall erübrigt sich ein separater Trocknungs- und Wärmebehandlungsschritt. Anderenfalls, z. B. bei der Beschichtung eines Glassubstrats, das nachträglich beschichtet werden soll, erfolgt die Trocknung des Überzugs bei Normaldruck oder vermindertem Druck und einer Temperatur um den Siedepunkt des verwendeten Lösungsmittels, z. B. 10 Minuten bei 110°C.

In der anschließenden Verfahrensstufe wird der Überzug bei einer Temperatur unterhalb des Erweichungspunkts des Grundglases, vorzugsweise unter 550°C, so wärmebehandelt, daß keine vollständige Verdichtung des Überzugs erfolgt. Die Behandlungstemperatur wird so gewählt, daß keine Formänderung erfolgt. Bei Flachglas (Fensterglas) bedeutet dies z.B., daß die Temperatur nicht über 500°C liegen sollte.

Wenn die auf diese Weise hergestellten Glassubstrate am Einsatzort, z.B. als Ofensichtfenster oder Brandschutzverglasungen, hohen Temperaturen ausgesetzt werden, kommt es während der Aufheizperiode aufgrund der vorhandenen Restporosität zu der bereits geschilderten Volumenkontraktion und Erzeugung einer Zugspannung in dem Überzug, welche verantwortlich ist für die angestrebte Verbesserung des Fließverhaltens.

Die folgenden Beispiele dienen der weiteren Erläuterung der Erfindung.

### BEISPIEL 1

**Herstellung eines SiO**_{**2**}**-Sols**
Benötigte Chemikalien:

| | |
|---|---|
| 20 ml | Methyltriethoxysilan |
| 6 ml | Tetraethoxysilan |
| 6 ml | Wasser |
| 6 ml | Propanol |
| 0,02 ml | HCl (konz.) |

Die Alkoxysilane werden unter Rühren gemischt und 3 ml Propanol werden zugegeben. Wasser, die restlichen 3 ml Propanol und die konzentrierte Salzsäure werden gemischt und langsam unter Rühren zufließen gelassen. Nach 20 min. ist das Sol auf Raumtemperatur abgekühlt und wird durch ein 0,2 µm Spritzenfilter filtriert.

Beschichtet wird Fensterglas mit Hilfe einer Tauchbeschichtungsapparatur (Ziehgeschwindigkeiten 1 - 8 mm/s). Die frisch gezogenen Schichten werden 15 min. bei 60°C getrocknet und anschließend in einem Ofen nach folgendem Temperaturprogramm (unvollständig) verdichtet:
Raumtemperatur auf 400°C mit 1 K/min
400°C auf 500°C mit 0,3 K/min.

Diese Temperaturbedingungen reichten nicht aus, den Überzug vollständig zu verdichten. Vielmehr blieben viele kleine, mit dem bloßen Auge nicht sichtbare Mikroporen im Überzug zurück. Die Dicke des fertigen Überzugs lag bei ca. 1,5 µm.

### BEISPIEL 2

**Herstellung eines Sols mit TiO**_{**2**}**-Anteil**
Benötigte Chemikalien:

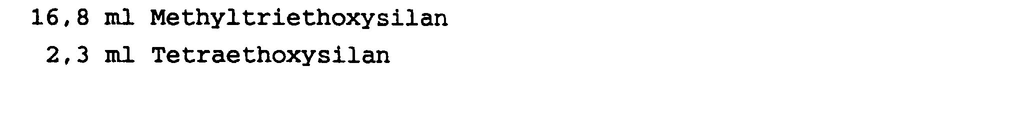

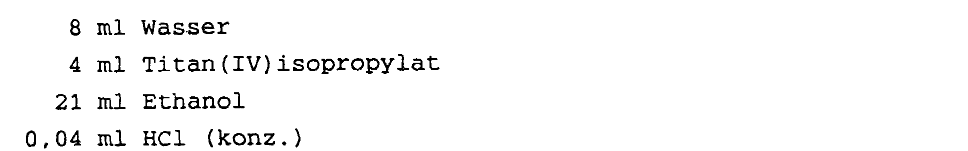

Die Alkoxysilane werden gemischt und mit 2 ml Ethanol, 0,04 ml HCl und 1 ml Wasser versetzt. Nach 5 min starken Rührens werden 4 ml Titan(IV)isopropylat hinzugegeben und es wird eine weitere Minute gerührt. Danach werden 7 ml Wasser und 19 ml Ethanol hinzugegeben und die resultierende Mischung wird nach 20 Minuten durch ein 0,8 µm Spritzenfilter filtriert.

Beschichtet wird Fensterglas mit Hilfe einer Tauchbeschichtungsapparatur (Ziehgeschwindigkeiten 1 - 6 mm/s). Die frisch gezogenen Schichten werden 15 min. bei 60°C getrocknet und anschließend in einem Ofen nach folgendem Temperaturprogramm verdichtet:
Raumtemperatur auf 400°C mit 1 K/min
400°C auf 500°C mit 0,3 K/min.
Die Dicke des fertigen Überzugs lag bei 1 - 1,5 µm.

### BEISPIEL 3

**Herstellung eines Beschichtungssols mit Kieselsolanteil**
Benötigte Chemikalien:

| | |
|---|---|
| 20 ml | Methyltriethoxysilan |
| 6 ml | Tetraethoxysilan |
| 15 g | Bayer-Kieselsol Typ 300, 30 Gew.-% (auf 45 Gew.-% einkonzentriert) |
| 0,3 ml | HCl (konz.) |
| 5 ml | Propanol |

Die Silane werden vorgelegt und unter starkem Rühren wird das Kieselsol zugegeben. Nachdem sich eine Emulsion gebildet hat (ca. 20 Sek.) wird die Salzsäure zum Start der Hydrolyse zugesetzt. Die Mischung bleibt noch 20 - 60 Sek. trübe und wird anschließend schlagartig zuerst zäh-, dann dünnflüssig und klar. Während dieser Reaktion erwärmt sich das Sol auf ca. 40°C. Nach dem Abkühlen auf Raumtemperatur wird durch ein 0,8 µm Filter mit 5 µm Vorfilter filtriert. Das so hergestellte Sol kann mit Ethanol auf eine gewünschte Viskosität eingestellt werden und steht mindestens 6 h zum Beschichten zur Verfügung.

Beschichtet wird Fensterglas mit Hilfe einer Tauchbeschichtungsapparatur mit Ziehgeschwindigkeiten von 3 - 10 mm/s. Die frisch gezogenen Schichten werden 15 min. bei 60°C getrocknet und anschließend in einem Ofen nach folgendem Temperaturprogramm verdichtet:
Raumtemperatur auf 400°C mit 1 K/min
400°C auf 500°C mit 0,3 K/min.
Die Dicke des fertigen Überzugs lag bei 2 - 6,5 µm.

### BEISPIEL 4

**Herstellung eines Beschichtungssols mit Zirkonoxidanteil**
Benötigte Chemikalien:

| | |
|---|---|
| 19,2 ml | Methyltriethoxysilan |
| 2,6 ml | Tetraethoxysilan |
| 5,1 ml | H₂O |
| 2,7 ml | Zirkonium(IV)butylat (80% in n-Butanol) |
| 10,0 ml | Propanol |
| 0,05 ml | HCl (konz.) |

Die Silane werden vorgelegt und mit der Salzsäure und 1 ml Wasser 5 min. vorhydrolysiert. Zur Homogenisierung der Lösung werden noch 3 ml Propanol hinzugegeben. Nach Ablauf der 5 min. wird eine Mischung aus 3 ml Propanol und 2,7 ml Zirkon(IV)-butylat unter heftigem Rühren zu dem Vorhydrolysat gegeben. Nach einer Minute kann das restliche Wasser vermischt mit 4 ml Propanol, zugegeben werden. Nachdem die Lösung auf Raumtemperatur abgekühlt ist und durch ein 0,8 µm Filter filtriert wurde, kann sie für mindestens 8 h zum Beschichten verwendet werden.

Beschichtet wird Fensterglas mit Hilfe einer Tauchbeschichtungsapparatur mit Ziehgeschwindigkeiten von 1 - 6 mm/s. Die frisch gezogenen Schichten werden 15 min. bei 60°C getrocknet und anschließend in einem Ofen nach folgendem Temperaturprogramm verdichtet:
Raumtemperatur auf 400°C mit 1 K/min
400°C auf 500°C mit 0,3 K/min.
Die Dicke des fertigen Überzugs lag bei 1 - 1,5 µm.

### BEISPIEL 5

**Herstellung eines imprägnierten Glasfasergewebes**

Es werden 200 ml Methyltriethoxysilan, 60 ml Tetraethoxysilan und 71 ml 30% Kieselsol (BAYER Kieselsol Type 300) stark gerührt und mit 1,8 ml konzentrierter Salzsäure versetzt. Nach 10 Minuten wird mit 50 ml Ethanol verdünnt.

### Beschichtungsverfahren 1:

Das Sol wird in ein Polyethylen-Tauchbecken gefüllt. Ein Glasfasergewebe (30 x 60 cm) aus handelsüblichem E-Glas mit einem Gewicht von 400 m²/g wird in die Lösung getaucht und nach 1 Minute Verweilzeit mit einer Ziehgeschwindigkeit von 6 mm/s herausgezogen. Anschließend wird das Gewebe für 20 Minuten bei 100°C im Trockenschrank getrocknet.

### Beschichtungsverfahren 2:

Das Sol wird mit 100 ml Ethanol weiter verdünnt und mit einem Druckluft-Zerstäuber auf das frei hängende Glasfasergewebe von beiden Seiten aufgesprüht, bis das Gewebe getränkt ist. Anschließend wird das Gewebe mit einem Heißluftgebläse mit ca. 100°C heißer Luft getrocknet.

Nach dieser Behandlung widersteht das Glasfasergewebe der Einwirkung von 2 Butangasbrennern (Tₘₐₓ: 1750°C). Zur Quantifizierung des Verstärkungseffekts wird ein 10 x 5 cm großes Stück des Gewebes in einer Meßapparatur untersucht, welche die Verlängerung des Gewebes unter Temperaturbelastung registriert. Hierbei zeigt sich für das unbeschichtete Gewebe ein Erweichungspunkt von ca. 840°C, während die beschichtete Probe erst bei ca. 1050°C abreißt.

## Patentansprüche

1. Verfahren zur Herstellung von Glassubstraten mit verbesserter Langzeitstandfähigkeit bei erhöhten Temperaturen, bei dem man
(a) auf ein Glassubstrat eine Überzugszusammensetzung aufbringt, die erhalten wurde durch Hydrolyse und Kondensation mindestens einer flüssigen und/oder in einem Lösungsmittel gelösten Verbindung mindestens eines Elements aus der Gruppe Si, Al, Ti und Zr und/oder eines entsprechenden Vorkondensats, gegebenenfalls in Kombination mit im Reaktionsmedium löslichen Verbindungen mindestens eines Elements aus der Gruppe der Alkalimetalle, Erdalkalimetalle und Bor und gegebenenfalls in Anwesenheit eines Kondensationskatalysators; und
(b) den so erhaltenen Überzug wärmebehandelt;
dadurch gekennzeichnet, daß man den Überzug nicht vollständig verdichtet, so daß er nach der Wärmebehandlung eine Restporosität von 1 bis 10 Volumenprozent aufweist, welche Mikroporen mit einer Porengröße von ≤ 20 nm umfaßt.

2. Verfahren nach Anspruch 1, dadurch gekennzeichnet, daß die Überzugszusammensetzung nach dem Sol-Gel-Verfahren hergestellt wird.

3. Verfahren nach irgendeinem der Ansprüche 1 und 2, dadurch gekennzeichnet, daß es sich bei dem Glassubstrat um ein Silicatglas, Bleisilicatglas, Phosphat-, Borat- oder Seltenerdglas mit oder ohne Alkali- und/oder Erdalkalianteil handelt.

4. Verfahren nach irgendeinem der Ansprüche 1 bis 3, dadurch gekennzeichnet, daß die Überzugszusammensetzung eine SiO₂-, Al₂O₃-, ZrO₂-, TiO₂-, SiO₂/TiO₂-, SiO₂/ZrO₂-, B₂O₃/SiO₂-, Na₂O/B₂O₃/SiO₂- oder Na₂O/Al₂O₃/B₂O₃/SiO₂-Zusammensetzung, und insbesondere eine SiO₂-, SiO₂/ZrO₂-oder SiO₂/TiO₂-Zusammensetzung ist.

5. Verfahren nach irgendeinem der Ansprüche 1 bis 4, dadurch gekennzeichnet, daß als im Lösungsmittel gelöste Ausgangsverbindungen Hydroxide, Alkoxide, Halogenide, Säuren, Salze, Komplexe und/oder Additionsverbindungen der genannten Elemente verwendet werden.

6. Verfahren nach irgendeinem der Ansprüche 1 bis 5, dadurch gekennzeichnet, daß mindestens eine der Ausgangsverbindungen eine solche der allgemeinen Formel (I) ist:
Si(OR)₄ (I)
worin R für eine Alkylgruppe mit 1 bis 6, insbesondere 1 bis 4 Kohlenstoffatomen steht.

7. Verfahren nach Anspruch 6, dadurch gekennzeichnet, daß mindestens eine weitere Ausgangsverbindung eine solche der allgemeinen Formel (II) ist:
R*Si(OR)₃ (II)
worin R wie in Anspruch 6 definiert ist und R* für R oder C₆-C₁₄ Aryl, insbesondere Phenyl, steht.

8. Verfahren nach irgendeinem der Ansprüche 1 bis 7, dadurch gekennzeichnet, daß das Lösungsmittel Wasser oder eine Wasser/Alkohol-Mischung ist.

9. Verfahren nach irgendeinem der Ansprüche 1 bis 8, dadurch gekennzeichnet, daß Hydrolyse und Kondensation in Gegenwart eines sauren oder basischen Kondensationskatalysators durchgeführt werden.

10. Verfahren nach irgendeinem der Ansprüche 1 bis 9, dadurch gekennzeichnet, daß man der Überzugszusammensetzung vor, während und/oder nach der Herstellung derselben eine Dispersion von SiO₂, TiO₂, Al₂O₃ und/oder ZrO₂ bzw. der entsprechenden Mischoxide in Wasser und/oder einem organischen Lösungsmittel zusetzt.

11. Verfahren nach irgendeinem der Ansprüche 1 bis 10, dadurch gekennzeichnet, daß das Aufbringen der Überzugszusammensetzung durch Tauchen, Ziehen oder Sprühen erfolgt.

12. Verfahren nach irgendeinem der Ansprüche 1 bis 11, dadurch gekennzeichnet, daß die Wärmebehandlung der Überzugs bei einer Temperatur unterhalb des Erweichungspunkts des Grundglases, und vorzugsweise unter 550°C erfolgt.

13. Verfahren nach irgendeinem der Ansprüche 1 bis 12, dadurch gekennzeichnet, daß der wärmebehandelte Überzug eine Dicke von 0,8 bis 8 µm, insbesondere 1,5 bis 3 µm aufweist.

14. Glassubstrate mit verbesserter Langzeitstandfähigkeit bei erhöhten Temperaturen, erhältlich nach dem Verfahren eines der Ansprüche 1 bis 13.

15. Verwendung der Glassubstrate nach Anspruch 14 für Ofensichtfenster, Brandschutzverglasungen und - fasermatten, optische Gläser und Chemikalienbehältnisse.

## Claims

1. Process for the manufacture of glass substrates with improved long-term stability at elevated temperatures, in which process
(a) a coating composition is applied onto a glass substrate, said coating composition having been obtained by hydrolysis and condensation of at least one compound of at least one element from the group Si, Al, Ti and Zr, said compound being liquid and/or dissolved in a solvent, and/or of a suitable precondensate, optionally in combination with compounds of at least one element from the group of alkali metals, alkaline earth metals and boron which are soluble in the reaction medium, and optionally in the presence of a condensation catalyst; and
(b) the coating thus obtained is heat-treated;
characterized in that the coating is not completely compacted so that after said heat-treatment it has a residual porosity of 1 to 10 percent by volume, said porosity including micropores having a pore size of ≤ 20 nm.

2. Process according to claim 1, characterized in that the coating composition is produced according to the sol/gel process.

3. Process according to any one of claims 1 and 2, characterized in that the glass substrate is silicate glass, lead silicate glass, phosphate glass, borate glass or rare earth glass, with or without alkali and/or alkaline earth components.

4. Process according to any one of claims 1 to 3, characterized in that the coating composition is a SiO₂, Al₂O₃, ZrO₂, TiO₂, SiO₂/TiO₂, SiO₂/ZrO₂, B₂O₃/SiO₂, Na₂O/B₂O₃/SiO₂ or Na₂O/Al₂O₃/B₂O₃/SiO₂ composition, and in particular a SiO₂, SiO₂/ZrO₂ or SiO₂/TiO₂ composition.

5. Process according to any one of claims 1 to 4, characterized in that hydroxides, alkoxides, halides, acids, salts, complexes and/or addition compounds of said elements are used as the starting compounds dissolved in the solvent.

6. Process according to any one of claims 1 to 5, characterized in that at least one of the starting compounds is a compound of the general formula (I):
Si(OR)₄ (I)
wherein R is an alkyl group having 1 to 6, particularly 1 to 4 carbon atoms.

7. Process according to claim 6, characterized in that at least one further starting compound is a compound of the general formula (II) :
R*Si(OR)₃ (II)
wherein R is defined as in claim 6; and R* represents R or C₆-C₁₄ aryl, particularly phenyl.

8. Process according to any one of claims 1 to 7, characterized in that the solvent is water or a water/alcohol mixture.

9. Process according to any one of claims 1 to 8, characterized in that the hydrolysis and condensation are conducted in the presence of an acidic or basic condensation catalyst.

10. Process according to any one of claims 1 to 9, characterized in that a dispersion of SiO₂, TiO₂, Al₂O₃ and/or ZrO₂ or the corresponding mixed oxides in water and/or an organic solvent is added to the coating composition before, during and/or after the preparation of the same.

11. Process according to any one of claims 1 to 10, characterized in that the coating composition is applied by dipping, drawing or spraying.

12. Process according to any one of claims 1 to 11, characterized in that the coating is heat-treated at a temperature below the softening point of the base glass, preferably below 550°C.

13. Process according to any one of claims 1 to 12, characterized in that the heat-treated coating exhibits a thickness ranging from 0.8 to 8 µm, preferably 1.5 to 3 µm.

14. Glass substrate with improved long-term stability at elevated temperatures, obtainable according to the process according to any one of claims 1 to 13.

15. Use of the glass substrate as claimed in claim 14 for furnace windows, fire-proof glazing and fire-proof fiber mats, optical glass and containers for chemicals.

## Revendications

1. Procédé de fabrication de substrats en verre ayant une stabilité améliorée à long terme, à des températures augmentées, dans lequel :
(a) on applique, sur un substrat en verre, une composition de revêtement qu'on obtient par hydrolyse et condensation d'au moins un composé, liquide et/ou dissous dans un solvant, d'au moins un élément choisi dans l'ensemble constitué par Si, Al, Ti et Zr et/ou d'un précondensat correspondant, éventuellement en combinaison avec des composés, solubles dans le milieu de réaction, d'au moins un élément choisi dans l'ensemble constitué par les métaux alcalins, les métaux alcalino-terreux et le bore, et éventuellement en présence d'un catalyseur de condensation ; et
(b) on traite à la chaleur le revêtement ainsi obtenu ;
caractérisé en ce qu'on ne comprime pas complètement le revêtement, de sorte qu'après le traitement à la chaleur, celui-ci présente une porosité résiduelle de 1 à 10 % en volume, comprenant des micropores d'une dimension ≤ 20 nm.

2. Procédé selon la revendication 1, caractérisé en ce qu'on prépare la composition de revêtement d'après le procédé sol-gel.

3. Procédé selon la revendication 1 ou 2, caractérisé en ce que le substrat en verre est un substrat en verre de silicate, en verre de silicate de plomb, en verre de phosphate, de borate ou des terres rares, avec ou sans composés alcalins ou alcalino-terreux.

4. Procédé selon l'une quelconque des revendications 1 à 3, caractérisé en ce que la composition de revêtement est une composition à base de SiO₂, Al₂O₃, ZrO₂, TiO₂, SiO₂/TiO₂, SiO₂/ZrO₂, B₂O₃/SiO₂, Na₂O/B₂O₃/SiO₂ ou Na₂O/Al₂O₃/B₂O₃/SiO₂, et en particulier une composition à base de SiO₂, SiO₂/ZrO₂ ou SiO₂/TiO₂.

5. Procédé selon l'une quelconque des revendications 1 à 4, caractérisé en ce qu'on utilise, comme composés de départ dissous dans le solvant, des hydroxydes, des alcoxydes, des halogénures, des acides, des sels, des complexes et/ou des composés d'addition desdits éléments.

6. Procédé selon l'une quelconque des revendications 1 à 5, caractérisé en ce qu'au moins un des composés de départ répond à la formule générale (I) :
Si(OR)₄ (I)
où R représente un groupe alkyle ayant de 1 à 6, en particulier de 1 à 4 atomes de carbone.

7. Procédé selon la revendication 6, caractérisé en ce qu'au moins un autre composé de départ répond à la formule générale (II) :
R*Si(OR)₃ (II)
où R est tel que défini dans la revendication 6, et R^{*} signifie R ou un groupe aryle en C₆-C₁₄, en particulier le groupe phényle.

8. Procédé selon l'une quelconque des revendications 1 à 7, caractérisé en ce que le solvant est l'eau ou un mélange d'eau et d'alcool.

9. Procédé selon l'une quelconque des revendications 1 à 8, caractérisé en ce qu'on effectue l'hydrolyse et la condensation en présence d'un catalyseur de condensation acide ou basique.

10. Procédé selon l'une quelconque des revendications 1 à 9, caractérisé en ce qu'on ajoute une dispersion de SiO₂, TiO₂, Al₂O₃ et/ou ZrO₂ à la composition de revêtement avant, pendant et/ou après la préparation de celle-ci, ou aux oxydes mélangés correspondants, dans de l'eau et/ou dans un solvant organique.

11. Procédé selon l'une quelconque des revendications 1 à 10, caractérisé en ce qu'on applique la composition de revêtement par immersion, par étirage ou par pulvérisation.

12. Procédé selon l'une quelconque des revendications 1 à 11, caractérisé en ce qu'on effectue le traitement thermique du revêtement à une température située au-dessous du point de ramollissement du verre de base, et de préférence au-dessous de 550°C.

13. Procédé selon l'une quelconque des revendications 1 à 12, caractérisé en ce que le revêtement traité à la chaleur a une épaisseur de 0,8 à 8 µm, en particulier de 1,5 à 3 µm.

14. Substrats en verre ayant une stabilité améliorée à long terme, à des températures augmentées, qu'on peut obtenir d'après le procédé selon l'une des revendications 1 à 13.

15. Utilisation des substrats en verre selon la revendication 14 pour des fenêtres d'inspection de fours, des vitrages et des nappes de fibres pare-feu, des verres optiques et des récipients pour produits chimiques.
